# EUROPEAN PATENT APPLICATION

(11) **EP 4 723 385 A1**
(43) Date of publication of application: **08.04.2026**
(21) Application number: 25197411.9
(22) Date of filing: 21.08.2025
(51) Int. Cl.: H01R 11/09, H01R 31/06, H01R 12/70, H01R 43/00, H05K 5/00

(54) **REPAIRABLE CONNECTOR MODULE AND ELECTRONIC DEVICE**

(30) Priority: 04.10.2024 JP 2024174975
(71) Applicant: Japan Aviation Electronics Industry, Ltd., Tokyo 150-0043 (JP)
(72) Inventor: KIMURA, Akira, Tokyo (JP)
(74) Representative: INNOV-GROUP

(57) **Abstract**

A repairable connector module (1) includes a first receptacle connector (10) and a second receptacle connector (11). The first receptacle connector (10) and the second receptacle connector (11) are configured to conform to the same shape standard. A mating orientation of the repairable connector module (1) with respect to an enclosure plug connector (4) is switchable between: a first mating orientation in which the second receptacle connector (11) is mated with the enclosure plug connector (4) and the first receptacle connector (10) is configured to mate with an external plug connector (500); and a second mating orientation in which the first receptacle connector (10) is mated with the enclosure plug connector (4) and the second receptacle connector (11) is configured to mate with the external plug connector (500).

## Description

### BACKGROUND

The present invention relates to a repairable connector module and an electronic device.

Patent Literature 1, as shown in Fig. 10 of the present application, discloses a digital camera 105 including: a front cover 100 and a rear cover 101 forming the outer casing; a circuit board 102; a relay connector 103 surface-mounted on the circuit board 102; and a housing member 104 that is configured to mate with the relay connector 103 and into which an IC card (not shown) is inserted. The housing member 104 is configured to be easily replaceable by detaching it from the relay connector 103.

[Patent Literature 1] Japanese Unexamined Patent Publication No. 2004-071273

### SUMMARY

In the configuration of Patent Literature 1, there remains room for improvement in terms of extending the service life of the housing member 104.

It is an object of the present disclosure to extend the service life of a repairable connector module.

According to one aspect of the present disclosure, there is provided a repairable connector module detachably attachable to an enclosure plug connector disposed inside an enclosure of an electronic device. The repairable connector module includes a first receptacle connector configured to mate with an external plug connector from outside the enclosure and a second receptacle connector configured to mate with the enclosure plug connector. The first and second receptacle connectors are configured to conform to the same shape standard. A mating orientation of the repairable connector module with respect to the enclosure plug connector is switchable between a first mating orientation in which the second receptacle connector is mated with the enclosure plug connector and the first receptacle connector is configured to mate with the external plug connector, and a second mating orientation in which the first receptacle connector is mated with the enclosure plug connector and the second receptacle connector is configured to mate with the external plug connector.

According to the present disclosure, the service life of the repairable connector module can be extended.

The above and other objects, features and advantages of the present disclosure will become more fully understood from the detailed description given hereinbelow and the accompanying drawings.

### BRIEF DESCRIPTION OF DRAWINGS

Fig. 1 is a perspective view of an electronic device (First Embodiment);
Fig. 2 is a perspective view showing a state in which a cover is removed from an enclosure main body (First Embodiment);
Fig. 3 is a perspective view showing a state in which a repairable connector module is removed from an enclosure plug connector (First Embodiment);
Fig. 4 is a perspective view of the repairable connector module (First Embodiment);
Fig. 5 is a perspective view of the enclosure main body and the enclosure plug connector (First Embodiment);
Fig. 6 is a perspective view of the cover viewed from another angle (First Embodiment);
Fig. 7 is a partially cutaway perspective view showing a state in which the repairable connector module is mated with the enclosure plug connector (First Embodiment);
Fig. 8 is a partially cutaway perspective view showing a state in which the cover is attached to the enclosure main body (First Embodiment);
Fig. 9 is a side cross-sectional view of the electronic device (Second Embodiment); and

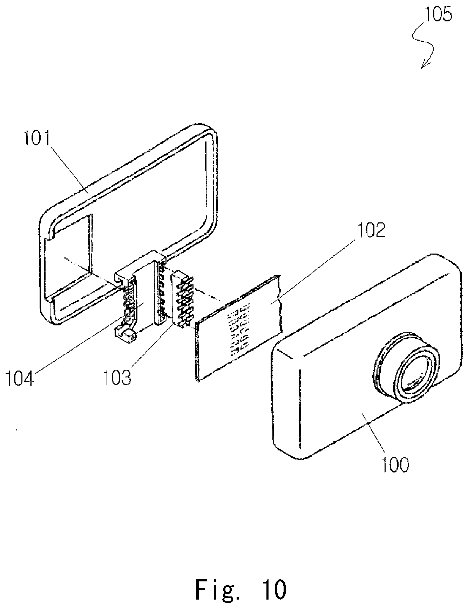

Fig. 10 is a simplified version of Fig. 2 in Patent Literature 1.

### DESCRIPTION OF EMBODIMENTS

Hereinafter, the present invention will be described through embodiments. However, the invention according to the claims is not limited to the embodiments described below. In addition, not all of the configurations described in the embodiments are necessarily essential as means for solving the problems. For clarity of explanation, the following description and drawings are partially omitted or simplified as appropriate. In the drawings, the same reference numerals are given to the same elements, and redundant explanation is omitted as needed.

In the following embodiments, for convenience of explanation, the description may be divided into a plurality of sections or embodiments when necessary. Unless explicitly stated otherwise, these are not independent of each other, but may be related as modifications, applications, detailed explanations, or supplementary explanations of one another. Further, in the following embodiments, when referring to numerical values such as the number, amount, quantity, or range of components, unless explicitly specified or clearly limited to a specific number in principle, such numbers are not limited to the specified values, and may include values greater or less than the stated ones.

Furthermore, in the following embodiments, unless explicitly stated or clearly considered essential in principle, each component (including operational steps and the like) is not necessarily essential. Likewise, when referring to the shape, positional relationship, or the like of components, unless explicitly stated or clearly considered otherwise in principle, such descriptions shall be construed to include substantially similar or approximate configurations. The same applies to numerical references such as the number, value, quantity, or range.

### (First Embodiment)

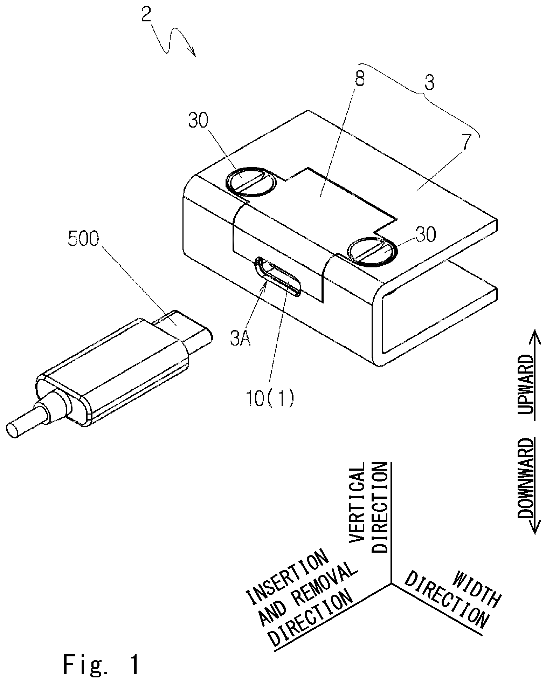

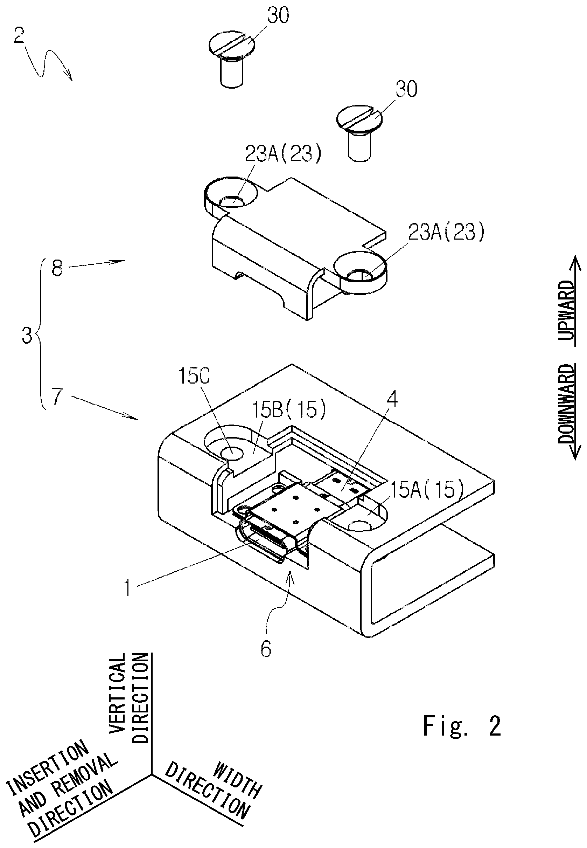

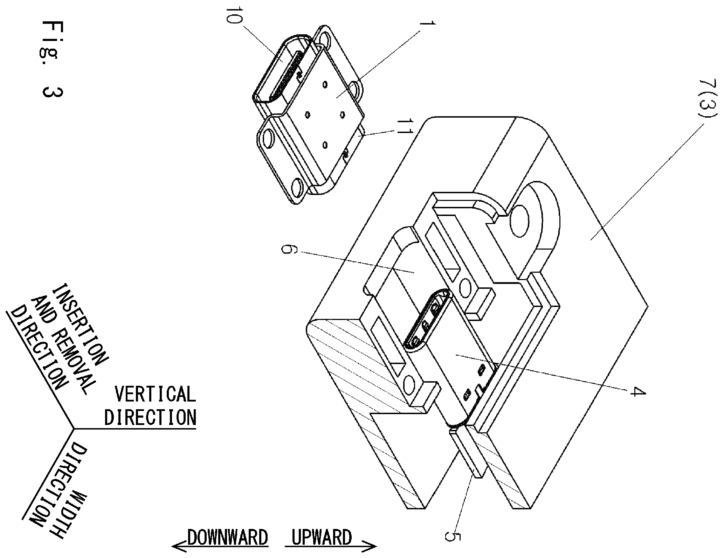

The first embodiment of the present disclosure will now be described with reference to Figs. 1 through 8. Fig. 1 is a perspective view of an electronic device. Fig. 2 is a perspective view showing a state in which a cover is removed from an enclosure main body. Fig. 3 is a perspective view showing a state in which a repairable connector module is removed from an enclosure plug connector.

As shown in Figs. 1 to 3, a repairable connector module 1 is configured to be detachably attachable to an enclosure plug connector 4 disposed inside an enclosure 3 of an electronic device 2. The enclosure plug connector 4 is mounted on an enclosure substrate 5 disposed inside the enclosure 3 of the electronic device 2. Therefore, it can also be said that the repairable connector module 1 is detachably mounted on the enclosure substrate 5 disposed inside the enclosure 3 of the electronic device 2. The repairable connector module 1 is mounted on the enclosure substrate 5 by mating the repairable connector module 1 with the enclosure plug connector 4 mounted on the enclosure substrate 5. In this manner, the owner of the electronic device 2 can personally attach or detach the repairable connector module 1 to or from the enclosure plug connector 4, thereby ensuring the right to repair the repairable connector module 1.

The electronic device 2 is typically a portable terminal such as a laptop computer, tablet device, or smartphone. However, the electronic device 2 may also be a stationary terminal such as a desktop computer.

The enclosure 3 includes an enclosure main body 7 having a module accommodating space 6 for accommodating the repairable connector module 1, and a cover 8 for covering the repairable connector module 1 accommodated in the module accommodating space 6.

When the repairable connector module 1 is mated with the enclosure plug connector 4, an external plug connector 500 is configured to mate with the repairable connector module 1 from outside the enclosure 3.

Here, with reference to Figs. 1 and 3, the terms "insertion and removal direction," "vertical direction," and "width direction" are defined. The insertion and removal direction, the vertical direction, and the width direction are mutually orthogonal.

The insertion and removal direction refers to the direction in which the external plug connector 500 is inserted into or removed from the repairable connector module 1. The insertion and removal direction includes both a mating direction and a removal direction. The mating direction is the direction in which the external plug connector 500 approaches the repairable connector module 1 during mating. The removal direction is the direction in which the external plug connector 500 is moved away from the repairable connector module 1 during removal.

The vertical direction is the direction in which the cover 8 is attached to or removed from the enclosure main body 7. The vertical direction includes an upward direction and a downward direction. The upward direction is the direction in which the cover 8 is moved away from the enclosure main body 7 when being removed. The downward direction is opposite to the upward direction. The terms "upward" and "downward" are used solely for convenience of explanation and do not specify the orientation during use of the electronic device 2.

The width direction is, as mentioned above, orthogonal to both the insertion and removal direction and the vertical direction. The width direction includes an inward direction in the width direction and an outward direction in the width direction. The inward direction in the width direction is the direction toward the center of the repairable connector module 1 in the width direction. The outward direction in the width direction is the direction away from the center of the repairable connector module 1 in the width direction.

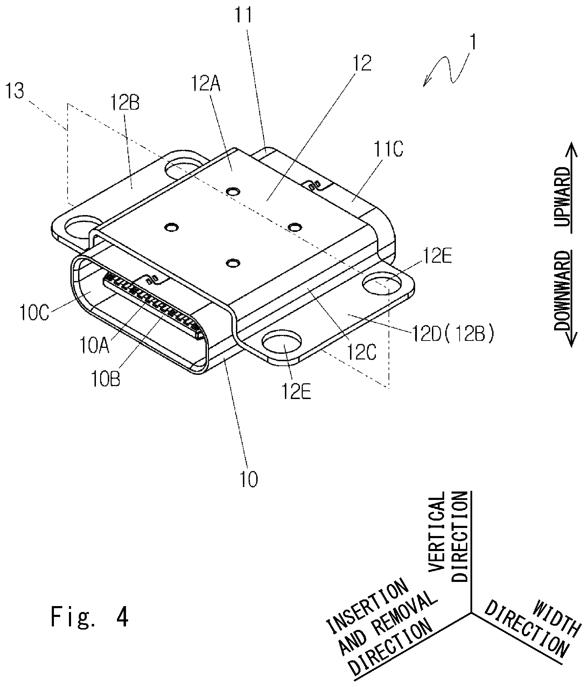

Fig. 4 is a perspective view of the repairable connector module 1. As shown in Fig. 4, the repairable connector module 1 includes a first receptacle connector 10, a second receptacle connector 11, and a bracket 12.

The first receptacle connector 10 is a 24-pin receptacle connector conforming to the USB Type-C shape standard. However, the number of pins of the first receptacle connector 10 may instead be 16 pins, 14 pins, or 6 pins. Alternatively, the first receptacle connector 10 may be a receptacle connector conforming to other shape standards such as USB Type-A, USB Type-B, mini USB Type-B, Micro USB Type-B, or Lightning.

Similarly, the second receptacle connector 11 is a 24-pin receptacle connector conforming to the USB Type-C shape standard. However, the number of pins of the second receptacle connector 11 may instead be 16 pins, 14 pins, or 6 pins. Alternatively, the second receptacle connector 11 may be a receptacle connector conforming to other shape standards such as USB Type-A, USB Type-B, mini USB Type-B, Micro USB Type-B, or Lightning.

The first receptacle connector 10 and the second receptacle connector 11 are configured to conform to the same shape standard. In the present embodiment, as an example, both the first receptacle connector 10 and the second receptacle connector 11 are receptacle connectors conforming to the USB Type-C shape standard.

The first receptacle connector 10 includes a rigid substrate 10B on which multiple electrode pads 10A are formed, and a cylindrical shell 10C that covers the rigid substrate 10B.

Similarly, the second receptacle connector 11 includes a rigid substrate on which multiple electrode pads are formed, and a cylindrical shell 11C that covers the rigid substrate.

The plurality of electrode pads 10A of the first receptacle connector 10 and the plurality of electrode pads of the second receptacle connector 11 are electrically connected to each other. The shell 10C of the first receptacle connector 10 and the shell 11C of the second receptacle connector 11 are electrically connected to each other.

The rigid substrate 10B of the first receptacle connector 10 and the rigid substrate of the second receptacle connector 11 may be formed from a single rigid substrate. In this case, as an example, multiple electrode pads would extend from one end to the other in the insertion and removal direction of the single rigid substrate.

The shell 10C serves to guide the mating connector during mating with the first receptacle connector 10, to maintain the orientation of the mating connector after mating, to position the mating connector in a plane orthogonal to the insertion and removal direction, and to provide electromagnetic shielding. The same applies to the shell 11C.

The mating direction of the mating connector with the first receptacle connector 10 and the mating direction of the mating connector with the second receptacle connector 11 are parallel to each other. Therefore, the direction in which the shell 10C of the first receptacle connector 10 extends and the direction in which the shell 11C of the second receptacle connector 11 extends are parallel to each other. The first receptacle connector 10 and the second receptacle connector 11 are disposed adjacent to each other in the insertion and removal direction. That is, they are arranged back-to-back in the insertion and removal direction.

The first receptacle connector 10 and the second receptacle connector 11 are connected to each other by any joining method. The shell 10C of the first receptacle connector 10 and the shell 11C of the second receptacle connector 11 are integrally formed, i.e., configured as a single component. This reduces the manufacturing cost of the repairable connector module 1. Alternatively, the shell 10C of the first receptacle connector 10 and the shell 11C of the second receptacle connector 11 may be configured separately, i.e., as two distinct components.

The rigid substrate 10B of the first receptacle connector 10 is typically a paper phenolic board or a glass epoxy board. The shell 10C of the first receptacle connector 10 is typically made of stainless steel or nickel-plated copper alloy. The same applies to the second receptacle connector 11.

As shown in Fig. 2, the bracket 12 is used to fix the repairable connector module 1 to the enclosure 3 in a state where the repairable connector module 1 is mated with the enclosure plug connector 4. Referring back to Fig. 4, the bracket 12 includes a bracket main body 12A and two flanges 12B. The bracket main body 12A is disposed to face the first receptacle connector 10 and the second receptacle connector 11 in the vertical direction, and is located above the first and second receptacle connectors. The bracket main body 12A is typically fixed to the shells 10C and 11C of the first and second receptacle connectors by spot welding. The two flanges 12B extend outward in the width direction from the respective ends of the bracket main body 12A. Each flange 12B includes a connecting portion 12C extending downward from the corresponding end of the bracket main body 12A and a flange main body 12D projecting outward in the width direction from the connecting portion 12C. Each flange main body 12D is formed with two positioning holes 12E. In each flange main body 12D, the two positioning holes 12E are formed to be spaced apart in the insertion and removal direction and to be aligned in the width direction.

Here, the repairable connector module 1 is configured to be mirror-symmetrical with respect to the symmetry reference plane 13. The symmetry reference plane 13 is a plane that bisects the repairable connector module 1 in the insertion and removal direction. Therefore, as shown in Fig. 3, when mating the repairable connector module 1 with the enclosure plug connector 4, either the first receptacle connector 10 or the second receptacle connector 11 may be mated with the enclosure plug connector 4. Thus, the owner of the electronic device 2 does not need to pay attention to the positional relationship in the insertion and removal direction between the first and second receptacle connectors 10 and 11 when replacing the repairable connector module 1, thereby enabling easy replacement of the repairable connector module 1.

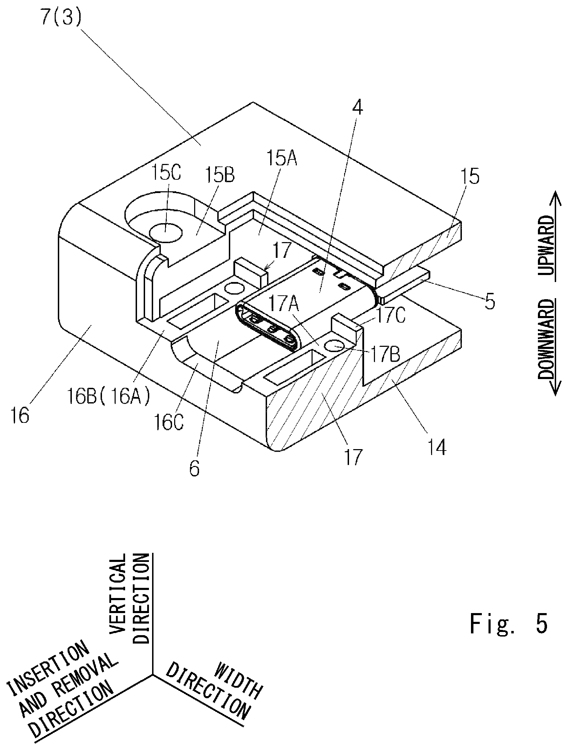

Next, referring to Fig. 5, the enclosure main body 7 of the enclosure 3 will be described. As shown in Fig. 5, the enclosure main body 7 includes a flat bottom plate 14, a flat top plate 15, side walls 16, and two module lower supports 17. The enclosure main body 7 is typically made of an insulating resin or metal. If made of an insulating resin, it may be formed, for example, by injection molding or machining polybutylene terephthalate (PBT), polyphenylene sulfide (PPS), nylon resin, or liquid crystal polymer (LCP). If made of metal, it may be formed by metal injection molding (MIM) or machining of stainless steel, or by die casting of zinc alloy.

Both the bottom plate 14 and the top plate 15 are formed as flat plates orthogonal to the vertical direction and are spaced apart in the vertical direction. The side wall 16 is disposed to connect the bottom plate 14 and the top plate 15. The two module lower supports 17 are formed to project upward from the bottom plate 14 toward the top plate 15.

The top plate 15 is formed with a cutout 15A that opens in the removal direction. The top plate 15 is also formed with two mounting recesses 15B. In Fig. 5, only one of the two mounting recesses 15B is depicted. The two mounting recesses 15B are formed adjacent to the cutout 15A in the outward direction of the width. They are disposed to sandwich the cutout 15A in the width direction. Each mounting recess 15B has a mounting female screw 15C formed on its bottom surface.

The side wall 16 is formed with a cutout 16A that opens upward. A shell accommodating recess 16C corresponding to the contour of the shell 10C of the first receptacle connector 10 is formed on the inner bottom surface 16B of the cutout 16A.

The two module lower supports 17 are disposed apart from each other in the width direction. When viewed along the insertion and removal direction, the two module lower supports 17 are disposed so as to sandwich the shell accommodating recess 16C. The upper surface 17A of each module lower support 17 is flush with the inner bottom surface 16B of the cutout 16A of the side wall 16. Each upper surface 17A is formed with a positioning hole 17B. Also, each upper surface 17A is formed with a module positioning plate 17C that projects upward. The positioning hole 17B and the module positioning plate 17C are arranged in this order in the mating direction.

As described above, the module accommodating space 6 is arranged between the bottom plate 14 and the top plate 15, and opens upward and in the removal direction through the cutouts 15A and 16A.

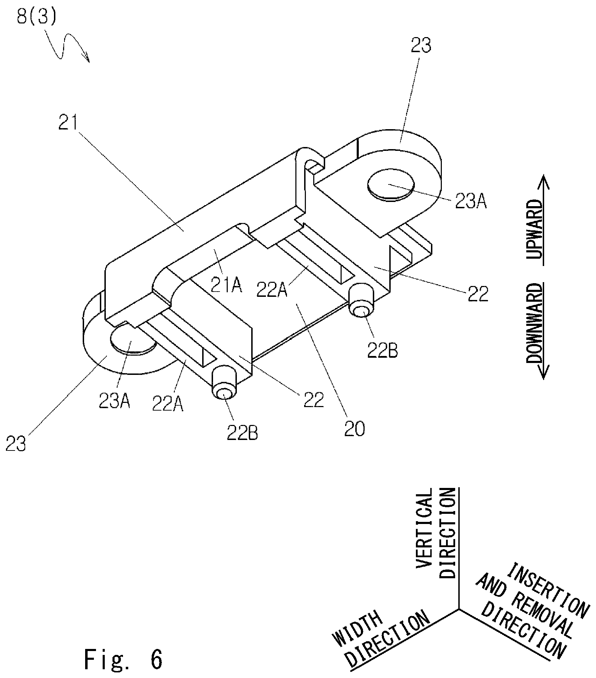

Next, referring to Fig. 6, the cover 8 of the enclosure 3 will be described. As shown in Fig. 6, the cover 8 includes a flat top plate 20, side walls 21, two module upper supports 22, and two mounting flanges 23. Like the enclosure main body 7, the cover 8 is typically made of an insulating resin or metal.

The top plate 20 is formed as a flat plate orthogonal to the vertical direction. The side wall 21 is disposed to project downward from the end of the top plate 20 in the removal direction. The side wall 21 is formed with a shell accommodating recess 21A that opens downward. The two module upper supports 22 are formed to project downward from the top plate 20. The two mounting flanges 23 are formed to project outward in the width direction from the respective ends of the top plate 20. Each mounting flange 23 is formed with a through hole 23A.

The top plate 20 and the side wall 21 are shaped complementarily to the cutout 15A of the top plate 15 and the cutout 16A of the side wall 16 of the enclosure main body 7 shown in Fig. 5. Each module upper support 22 has a positioning pin 22B formed on its lower surface 22A projecting downward.

Returning to Fig. 5, the enclosure substrate 5 is flat and supported by the bottom plate 14 or the top plate 15 of the enclosure main body 7. The enclosure substrate 5 is a rigid board, typically a paper phenolic board or a glass epoxy board.

The enclosure plug connector 4 is mounted on the enclosure substrate 5. The enclosure plug connector 4 is a plug connector that conforms to the same shape standard as the first and second receptacle connectors 10 and 11. The enclosure plug connector 4 is disposed such that its mating direction aligns with the insertion and removal direction.

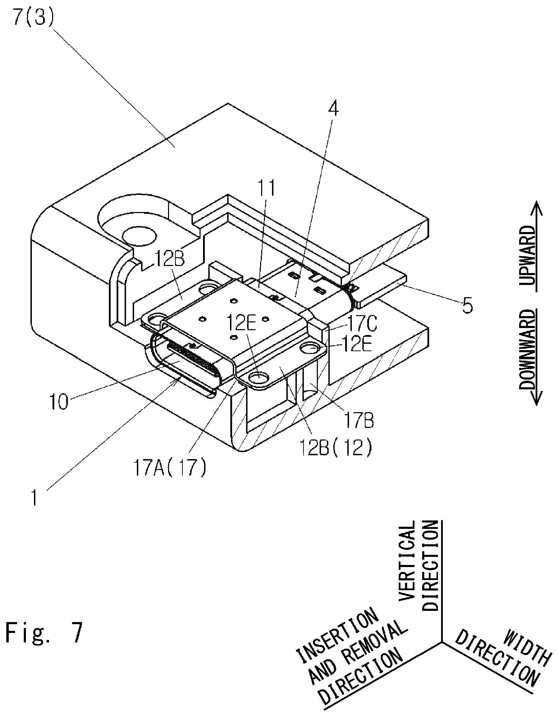

Fig. 7 shows a state in which the repairable connector module 1 is mated with the enclosure plug connector 4. Referring to Fig. 7, to mate the repairable connector module 1 with the enclosure plug connector 4, the two flanges 12B of the bracket 12 of the repairable connector module 1 are seated on the respective upper surfaces 17A of the two module lower supports 17 of the enclosure main body 7 such that either the first or second receptacle connector (here, the second receptacle connector 11 as an example) faces the enclosure plug connector 4 in the insertion and removal direction. In this state, sliding the repairable connector module 1 in the mating direction mates the second receptacle connector 11 with the enclosure plug connector 4. At this time, the two flanges 12B of the bracket 12 abut the corresponding module positioning plates 17C in the insertion and removal direction, thereby restricting further movement of the repairable connector module 1 in the mating direction. Also, among the two positioning holes 12E of each flange 12B, the one closest to the enclosure plug connector 4 aligns with the positioning hole 17B of the corresponding module lower support 17 in a plan view.

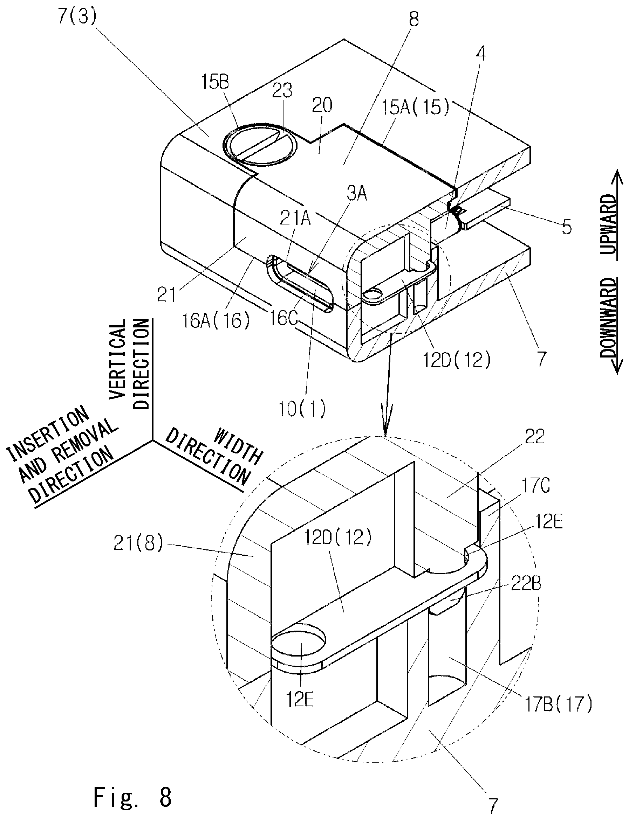

In this state, as shown in Fig. 8, the cover 8 is attached to the enclosure main body 7. At this time, the top plate 20 of the cover 8 is accommodated in the cutout 15A of the top plate 15 of the enclosure main body 7, and the side wall 21 is accommodated in the cutout 16A of the side wall 16. The two mounting flanges 23 of the cover 8 are accommodated in the two mounting recesses 15B of the top plate 15. Then, as shown in Fig. 2, two screws 30 are screwed through the through holes 23A of the two mounting flanges 23 into the mounting female screws 15C in the mounting recesses 15B of the top plate 15 of the enclosure main body 7, thereby fixing the cover 8 to the enclosure main body 7.

As described above, in the state where the cover 8 is fixed to the enclosure main body 7, the shell accommodating recess 16C of the side wall 16 of the enclosure main body 7 and the shell accommodating recess 21A of the side wall 21 of the cover 8 face each other in the vertical direction, thereby forming a mating opening 3A in the enclosure 3, through which the external plug connector 500 shown in Fig. 1 can be inserted to mate with the repairable connector module 1.

Furthermore, in the state where the cover 8 is fixed to the enclosure main body 7, the repairable connector module 1 is restrained in the vertical direction by being sandwiched between the enclosure main body 7 and the cover 8. Specifically, the two flange main bodies 12D of the repairable connector module 1 are vertically sandwiched between the two module lower supports 17 of the enclosure main body 7 and the two module upper supports 22 of the cover 8. Thus, the repairable connector module 1 is vertically restrained by the enclosure 3. Here, "restrained" means that movement of the repairable connector module 1 may be either completely prevented or slightly permitted.

Additionally, in the state where the cover 8 is fixed to the enclosure main body 7, the repairable connector module 1 is restrained in the insertion and removal direction by being sandwiched between the enclosure main body 7 and the cover 8. Specifically, the two flange main bodies 12D of the repairable connector module 1 are sandwiched in the insertion and removal direction between the module positioning plates 17C of the two module lower supports 17 of the enclosure main body 7 and the side wall 21 of the cover 8. Thus, the repairable connector module 1 is restrained in the insertion and removal direction by the enclosure 3. The meaning of "restrained", as noted above, means that movement of the repairable connector module 1 may be either completely prevented or slightly permitted.

Furthermore, in the state where the cover 8 is fixed to the enclosure main body 7, the repairable connector module 1 is positioned in the insertion and removal direction and the width direction by the positioning pins 22B of the two module upper supports 22 of the cover 8. Specifically, the positioning pins 22B of the respective module upper supports 22 of the cover 8 are inserted into the positioning holes 12E closest to the enclosure plug connector 4 among the two positioning holes 12E formed in the corresponding flange main bodies 12D of the bracket 12, and also inserted into the positioning holes 17B of the corresponding module lower supports 17 of the enclosure main body 7. This allows the repairable connector module 1 to be positioned in the insertion and removal direction and the width direction by the enclosure 3.

Typically, the positioning of the repairable connector module 1 in the insertion and removal direction relative to the enclosure 3 is achieved by the positioning pins 22B of the module upper supports 22. Accordingly, for example, the module positioning plates 17C of the module lower supports 17 may solely function as temporary positioning members in the insertion and removal direction during the mating of the repairable connector module 1 with the enclosure plug connector 4.

Referring now to Fig. 1, to mate the external plug connector 500 with the repairable connector module 1, the external plug connector 500 is inserted into the mating opening 3A of the enclosure 3. As a result, the external plug connector 500 mates with the first receptacle connector 10 of the repairable connector module 1.

Here, the first receptacle connector 10 of the repairable connector module 1 is more susceptible to wear or damage due to repeated mating with the external plug connector 500. Therefore, to replace the repairable connector module 1 with a new one, the two screws 30 are removed from the enclosure 3, and the cover 8 is pulled upward from the enclosure main body 7. Then, as shown in Fig. 3, the repairable connector module 1 is pulled out from the enclosure plug connector 4 in the removal direction. After that, the new repairable connector module 1 is mated with the enclosure plug connector 4, and the cover 8 is reattached to the enclosure main body 7.

In the present embodiment, further longevity of the repairable connector module 1 can be achieved by rotating the module 180 degrees in plan view and switching its mating orientation.

That is, Fig. 7 illustrates a first mating orientation in which the second receptacle connector 11 is mated with the enclosure plug connector 4 and the external plug connector 500 is configured to mate with the first receptacle connector 10. In this configuration, repeated insertion and removal of the external plug connector 500 occurs at the first receptacle connector 10, leading to faster wear than at the second receptacle connector 11. Therefore, before the first receptacle connector 10 becomes damaged, the repairable connector module 1 may be removed from the enclosure plug connector 4, and the mating may be reversed such that the first receptacle connector 10 is mated with the enclosure plug connector 4 instead of the second. In other words, the mating orientation of the repairable connector module 1 may be switched from the first to a second mating orientation, in which the first receptacle connector 10 is mated with the enclosure plug connector 4, and the external plug connector 500 is configured to mate with the second receptacle connector 11. This suppresses further wear of the first receptacle connector 10, and the external plug connector 500 is repeatedly mated with the second receptacle connector 11, thereby extending the lifespan of the repairable connector module 1.

Also, as shown in Fig. 3, the first and second receptacle connectors 10 and 11 are receptacle connectors that conform to the same shape standard. Therefore, the enclosure plug connector 4 and the external plug connector 500 are also plug connectors conforming to the same shape standard. That is, the operation of mating either the first or second receptacle connector 10 or 11 with the enclosure plug connector 4 in Fig. 3 is almost the same as the operation of mating the external plug connector 500 with either the first or second receptacle connector 10 or 11 in Fig. 1. Accordingly, the mating operation of mating the repairable connector module 1 with the enclosure plug connector 4 is easy for the owner of the electronic device 2.

It may be expected that, when the external plug connector 500 is pulled out from the repairable connector module 1, the repairable connector module 1 might also be pulled out from the enclosure 3 together with the external plug connector 500. However, as shown in Fig. 8, in the state where the cover 8 is fixed to the enclosure main body 7, the two flange main bodies 12D of the repairable connector module 1 face the side wall 21 of the cover 8 in the insertion and removal direction, thereby preventing the repairable connector module 1 from being unintentionally removed from the enclosure 3. Similarly, as shown in Fig. 8, in this fixed state, one of the two positioning holes 12E formed in each flange main body 12D of the repairable connector module 1 receives the positioning pin 22B of the corresponding module upper support 22 of the cover 8. Thus, any force applied to the repairable connector module 1 in the removal direction when the external plug connector 500 is extracted is received by the two positioning pins 22B, further contributing to secure retention of the repairable connector module 1 in the enclosure 3.

As described above, the first embodiment of the present disclosure has been explained, and this first embodiment has the following features.

That is, the repairable connector module 1 is detachably attachable to the enclosure plug connector 4 disposed inside the enclosure 3 of the electronic device 2. The repairable connector module 1 includes the first receptacle connector 10, which is configured to mate with the external plug connector 500 from outside the enclosure 3, and the second receptacle connector 11, which is configured to mate with the enclosure plug connector 4. The first receptacle connector 10 and the second receptacle connector 11 are configured to conform to the same shape standard. The mating orientation of the repairable connector module 1 with respect to the enclosure plug connector 4 is switchable between the first mating orientation, in which the second receptacle connector 11 is mated with the enclosure plug connector 4 and the first receptacle connector 10 is configured to mate with the external plug connector 500, and the second mating orientation, in which the first receptacle connector 10 is mated with the enclosure plug connector 4 and the second receptacle connector 11 is configured to mate with the external plug connector 500. According to the above configuration, switching the mating orientation of the repairable connector module 1 between the first and second mating orientations enables extending the lifespan of the repairable connector module 1.

In addition, the mating direction of the first receptacle connector 10 and the mating direction of the second receptacle connector 11 are parallel to each other. According to the above configuration, the parallel alignment of the mating directions contributes to the reduction of the height of the repairable connector module 1, compared to a case where the mating directions are not parallel.

However, the mating direction of the first receptacle connector 10 and the mating direction of the second receptacle connector 11 may intersect. Typically, the mating directions may be orthogonal to each other. In this case, it contributes to downsizing the repairable connector module 1 in the insertion and removal direction.

Moreover, the first receptacle connector 10 and the second receptacle connector 11 are disposed back-to-back. According to the above configuration, it contributes to downsizing the repairable connector module 1.

Further, the first receptacle connector 10 includes a shell 10C (first shell), and the second receptacle connector 11 includes a shell 11C (second shell), and the shells 10C and 11C are integrally formed. According to the above configuration, the number of components of the repairable connector module 1 can be reduced, thus reducing manufacturing costs. However, the shells 10C and 11C may alternatively be configured as separate components, which increases design flexibility.

The repairable connector module 1 further includes the bracket 12 for fixing at least one of the first receptacle connector 10 or the second receptacle connector 11 to the enclosure 3 when either one is mated with the enclosure plug connector 4. According to the above configuration, the repairable connector module 1 can be properly fixed to the enclosure 3.

Note that, instead of fixing both the first and second receptacle connectors 10 and 11 to the enclosure 3 via the bracket 12, it is also conceivable to fix only one of them. Since the first and second receptacle connectors 10 and 11 are connected to each other in the repairable connector module 1, fixing the first receptacle connector 10 to the enclosure 3 or fixing the second receptacle connector 11 to the enclosure 3 effectively results in the same outcome.

Furthermore, in the first embodiment, as shown in Figs. 2 through 5, each flange 12B of the bracket 12 is placed on the module lower support 17 of the bottom plate 14 of the enclosure main body 7 throughout the entire insertion and removal direction. However, it is also possible that only part of each flange 12B is placed on the module lower support 17 in the insertion and removal direction.

For example, a configuration is also conceivable in which the distal end portion of each flange 12B of the bracket 12 in the removal direction is placed on the corresponding module lower support 17 of the bottom plate 14 of the enclosure main body 7 of the enclosure 3, while the other portion is spaced from the bottom plate 14 of the enclosure main body 7 of the enclosure 3. Similarly, for example, a configuration is also conceivable in which the distal end portion of each flange 12B of the bracket 12 in the mating direction is placed on the corresponding module lower support 17 of the bottom plate 14 of the enclosure main body 7 of the enclosure 3, while the other portion is spaced from the bottom plate 14 of the enclosure main body 7 of the enclosure 3.

In addition, the bracket 12 is fixed to both the first and second receptacle connectors 10 and 11. According to the above configuration, the handling of the repairable connector module 1 is improved. However, the bracket 12 may alternatively be fixed to only one of the two receptacle connectors 10 and 11.

Moreover, the electronic device 2 capable of being equipped with the repairable connector module 1 has the following features: the enclosure 3 includes the enclosure main body 7 having the module accommodating space 6 for accommodating the repairable connector module 1, and the cover 8 for covering the repairable connector module 1 accommodated in the space 6. According to the above configuration, the repairable connector module 1 can be concealed within the enclosure 3.

The bracket 12 includes at least one positioning hole 12E, and the cover 8 includes at least one positioning pin 22B that is inserted into the at least one positioning hole 12E. According to the above configuration, the repairable connector module 1 can be positioned in the enclosure 3 with a simple structure.

Further, in each flange body 12D, at least one positioning hole 12E includes two positioning holes 12E that are arranged at different positions in the mating direction. The at least one positioning pin 22B is inserted into the positioning hole 12E that is closest to the enclosure plug connector 4 among the two positioning holes 12E. According to the above configuration, even when an external force acts in the plane perpendicular to the vertical direction due to twisting of the external plug connector 500 mated with the repairable connector module 1, the displacement in the width direction of the receptacle connector (either 10 or 11) mated with the enclosure plug connector 4 can be reduced. Thus, the lifespan of the enclosure plug connector 4 can be extended.

It should be noted that more than three positioning holes 12E may be formed in each flange main body 12D.

### (Second Embodiment)

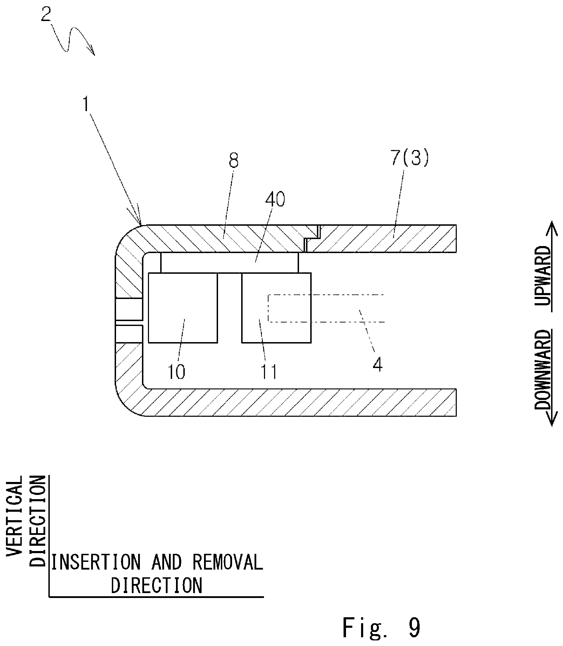

Next, the second embodiment of the present disclosure will be described with reference to Fig. 9. Hereinafter, differences from the first embodiment will be mainly described, and repetitive explanations will be omitted.

In the first embodiment described above, as suggested in Fig. 4, the first receptacle connector 10 and the second receptacle connector 11 are directly coupled to each other in the insertion and removal direction. In addition, the repairable connector module 1 and the cover 8 are separate components. As shown in Figs. 7 and 8, the cover 8 is attached to the enclosure main body 7 after the repairable connector module 1 is mated with the enclosure plug connector 4.

In contrast, in the present embodiment, as shown in Fig. 9, the repairable connector module 1 further includes a module substrate 40. The module substrate 40 is typically a rigid substrate. The first receptacle connector 10 and the second receptacle connector 11 are mounted on the module substrate 40. This configuration enables the use of commercially available connectors as the first and second receptacle connectors 10 and 11, thereby contributing to a reduction in the manufacturing cost of the repairable connector module 1.

Furthermore, the repairable connector module 1 includes the cover 8. The module substrate 40 is fixed to the cover 8. According to the above configuration, the first and second receptacle connectors 10 and 11, and the cover 8 are connected to each other, so that the operation of mating the repairable connector module 1 with the enclosure plug connector 4 and the operation of attaching the cover 8 to the enclosure main body 7 can be performed simultaneously, thereby simplifying the replacement work of the repairable connector module 1.

In the present embodiment, the repairable connector module 1 includes the cover 8, the module substrate 40 fixed to the cover 8, and the first and second receptacle connectors 10 and 11 mounted on the module substrate 40. The first and second receptacle connectors 10 and 11 are typically arranged apart from each other in the insertion and removal direction.

The repairable connector module 1 mounted on the module substrate 40 may also be provided as a separate component from the cover 8.

As described above, the invention has been explained with reference to embodiments, but the invention is not limited thereto. Various modifications to the configuration and details of the invention can be made within the scope of the invention understood by those skilled in the art.

The first and second embodiments can be combined as desirable by one of ordinary skill in the art.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

## Claims

1. A repairable connector module (1) detachably attachable to an enclosure plug connector (4) disposed inside an enclosure (3) of an electronic device (2), comprising:
a first receptacle connector (10) configured to mate with an external plug connector (500) from outside the enclosure (3); and
a second receptacle connector (11) configured to mate with the enclosure plug connector (4);
wherein the first receptacle connector (10) and the second receptacle connector (11) are configured to conform to the same shape standard, and
a mating orientation of the repairable connector module (1) with respect to the enclosure plug connector (4) is switchable between:
a first mating orientation in which the second receptacle connector (11) is mated with the enclosure plug connector (4) and the first receptacle connector (10) is configured to mate with the external plug connector (500), and
a second mating orientation in which the first receptacle connector (10) is mated with the enclosure plug connector (4) and the second receptacle connector (11) is configured to mate with the external plug connector (500).

2. The repairable connector module according to claim 1, wherein a mating direction of the first receptacle connector and a mating direction of the second receptacle connector are parallel to each other.

3. The repairable connector module according to claim 2, wherein the first receptacle connector and the second receptacle connector are disposed back-to-back.

4. The repairable connector module according to claim 3, wherein
the first receptacle connector includes a first shell,
the second receptacle connector includes a second shell, and
the first shell and the second shell are integrally formed.

5. The repairable connector module according to claim 3, wherein
the first receptacle connector includes a first shell,
the second receptacle connector includes a second shell, and
the first shell and the second shell are separately formed.

6. The repairable connector module according to claim 3, further comprising a bracket configured to fix at least one of the first receptacle connector or the second receptacle connector to the enclosure in a state where either one of the first or second receptacle connectors is mated with the enclosure plug connector.

7. The repairable connector module according to claim 6, wherein the bracket is fixed to at least one of the first or second receptacle connectors.

8. An electronic device capable of being equipped with the repairable connector module according to claim 7, wherein
the enclosure comprises an enclosure main body having a module accommodating space for accommodating the repairable connector module and a cover for covering the repairable connector module accommodated in the module accommodating space.

9. The electronic device according to claim 8, wherein
the bracket includes at least one positioning hole, and
the cover includes at least one positioning pin inserted into the at least one positioning hole.

10. The electronic device according to claim 9, wherein
the at least one positioning hole includes at least two positioning holes disposed at different positions in the mating direction, and
the at least one positioning pin is inserted into the positioning hole closest to the enclosure plug connector among the at least two positioning holes.

11. The repairable connector module according to claim 1, further comprising:
a module substrate, wherein
the first and second receptacle connectors are mounted on the module substrate.

12. The repairable connector module according to claim 11, further comprising a cover that is detachably attachable to an enclosure main body having a module accommodating space for accommodating the repairable connector module,
wherein the module substrate is fixed to the cover.
